# EUROPÄISCHE PATENTSCHRIFT

(11) **EP 0 983 803 B1**
(45) Veröffentlichungstag und Bekanntmachung des Hinweises auf die Patenterteilung: **20.12.2000**
(21) Anmeldenummer: 98116413.0
(22) Anmeldetag: 31.08.1998
(51) Int. Cl.: B07B 9/00

(54) **Verfahren und Vorrichtung zum Stofflichen Trennen von rieselfähigem Material**
Method and device for separating pourable material
Procédé et dispositif pour séparer des matières à faculté d' écoulement

(43) Veröffentlichungstag der Anmeldung: 08.03.2000
(73) Patentinhaber: VENTILATORENFABRIK OELDE GMBH, 59302 Oelde (DE)
(72) Erfinder: Ghosh, Sakti Dipl.-Ing.,, 59302 Oelde (DE); Michael Coxon, Dipl.-Ing, 59302 Oelde (DE); Klaus Gnegel, Dipl.-Ing, 59302 Oelde (DE)
(74) Vertreter: Stracke, Alexander, Dipl.-Ing.

(56) Entgegenhaltungen:
- EP-A- 0 739 657
- DE-A- 3 809 255
- DE-A- 19 631 442
- US-A- 3 909 397
- US-A- 4 303 501
- US-A- 4 637 096

## Beschreibung

Die vorliegende Erfindung betrifft ein Verfahren zum stofflichen Trennen von rieselfähigem Material gemäß dem Oberbegriff des Anspruchs 1 sowie eine Vorrichtung zur Durchführung des Verfahrens.

Bei der Herstellung von Hygienematerialien, wie Windeln, Inkontinenzprodukten oder dergleichen, werden neben Zelluloseflocken hochwertige Absorbens zur Feuchtigkeitsaufnahme verwendet und in einem Trägermaterial eingebettet.

Bei solchen in großen Stückzahlen hergestellten Serienprodukten fallen zwangsläufig gewisse Ausschußmengen an. Die Wiederverwertung dieser Ausschußware setzt jedoch eine einwandfreie Aufbereitung der eingesetzten Materialien voraus.

Eine genaue Stofftrennung mit definierten Eigenschaften ist notwendig, um eine exakte Zudosierung ohne Qualitätsminderung sicherzustellen.

Da dies bislang im gewünschten Umfang nicht möglich ist, muß die Ausschußware energetisch entsorgt oder in Deponien gelagert werden. Vor allem unter Berücksichtigung der immens großen Mengen hergestellter Hygieneartikel und der sich daraus ergebenden absoluten Menge an Ausschußware kommt dem Recyclingproblem eine besondere Bedeutung zu.

Zwar ist es aus der DE 19631442 A1 bekannt den komprimierten Zellstoff in Watteform mit eingelagertem Absorbens mechanisch, z. B. durch Aufreißwalzen oder Messerwerke so aufzulösen, daß eine stoffliche Trennung in Zelluloseflocken und Absorbens erfolgt, jedoch ist der Trennungsgrad hierbei unbefriedigend, so daß eine wirtschaftlich sinnvolle Verfahrensweise nicht gegeben ist.

Die bisher angedachten, zum Teil im Einsatz befindlichen Verfahren sind mechanisch sehr anfällig, weisen einen mangelhaften Trennungsgrad der Flocken bei unterschiedlichen Absorbenskonzentrationen auf und sind zu aufwendig und unwirtschaftlich.

Aus der DE 3 809 255 A1 ist es bekannt den Trägerstoff von anhaftenden Umhüllungsmaterial wie Folie o.dgl. zu trennen. Ein Trennen von eingelagertem Absorbens ist jedoch nicht möglich. Die US 4 637 069 beschreibt ein Verfahren, bei dem Rohbaumwolle gereinigt wird. Ein Zerreissen der Rohbaumwollballen erfolgt dabei allerdings nicht.

Der vorliegenden Erfindung liegt daher die Aufgabe zugrunde, ein Verfahren und eine Vorrichtung der gattungsgemäßen Art zu schaffen, mit denen eine stoffliche Trennung der Bestandteile so möglich ist, daß ein hoher, reproduzierbarer Trennungsgrad erreicht wird bei gleichzeitiger hoher Betriebssicherheit und damit wirtschaftlich für eine Serienproduktion eingesetzt werden können.

Diese Aufgabe wird durch ein Verfahren gelöst, das die Merkmale des Anspruchs 1 aufweist und durch eine Vorrichtung gemäß dem Anspruch 2.

Überraschend hat sich gezeigt, daß durch den hochbeschleunigten Luftstrom der mattenartige Trägerstoff zu Flocken zerrissen wird, die dann in einer Größe und Qualität vorliegen, wie sie zur Wiederaufarbeitung erforderlich sind.

Die Art des Auflösens hat erhebliche Vorteile gegenüber mechanischen Verkleinerungsgeräten, wie Messermühlen, Zerreißmaschinen oder Zerhackern.

Der durch das neue Verfahren erzielbare hohe Auflösungsgrad läßt sich parametrisch beeinflussen. Mechanische Anfälligkeiten, wie Verstopfung der Zerreißwalzen, Klumpenbildung, Überhitzung des Materials und eine dadurch gegebene Brandgefahr, sind nunmehr ausgeschlossen.

Darüber hinaus erfolgt schon durch die Luftströmung eine Teiltrennung, bei der das rieselförmige Absorbensmaterial aufgrund der hohen Schüttdichte zur Zelluloseflocke zu einem gewissen Teil herausfällt.

Bei der nachfolgenden Separierung, bei der das Flocken-/Absorbensgemisch in Vibrationen versetzt wird, erfolgt eine so gute Trennung der Flocken, daß diese in den Produktionsablauf zurückgeführt werden können.

Durch die Auswahl der richtigen Frequenz und Amplitude der Vibrationseinrichtung wird eine genau definierte Trennung der Komponenten erreicht. Ein anschließendes Sieben und Sichten führt zu einer weiteren Verfeinerung der Separierung des Absorbens von den Zellulosefasern.

Da das Ausgangsmaterial praktisch vollständig so aufbereitet wird, daß es einer Wiederverwertung zugeführt werden kann, entfällt die bislang notwendige Entsorgung bzw. energetische Verwertung. Hierdurch werden in erheblichem Umfang zum einen die Entsorgungskosten reduziert und zum anderen die Produktionskosten neu herzustellender Artikel, die dann ja aus einem entsprechenden Anteil der zurückgewonnenen Materialien bestehen, gesenkt.

Wie schon erwähnt, kommt der Erfindung deshalb eine besondere Bedeutung zu, weil die Hygieneartikel für deren Herstellung das neue Verfahren bzw. die neue Vorrichtung zum Einsatz kommen, in sehr großen Stückzahlen hergestellt werden.

Vorteilhafte Weiterbildungen der Erfindungen sind in den Unteransprüchen gekennzeichnet.

Das Verfahren wird nachfolgend anhand der beigefügten Zeichnung, die ein Ausführungsbeispiel der erfindungsgemäßen Vorrichtung darstellt, beschrieben.

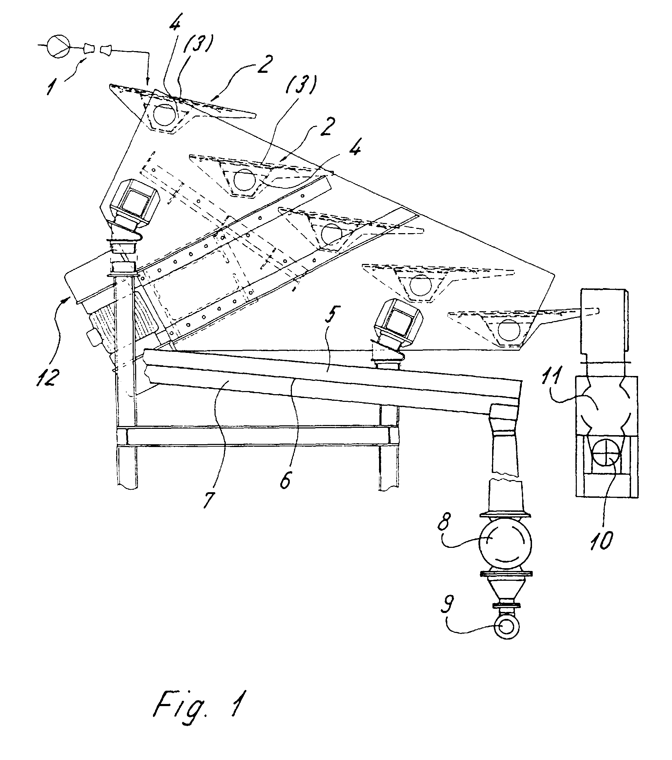

Die
- Figur 1: zeigt ein Ausführungsbeispiel der Vorrichtung in einer teilweise schematischen Seitenansicht.

In der Figur ist eine Vorrichtung gezeigt, mit der in einem watteförmigen, mattenartigen Trägerstoff eingelagerte Zellulose und Absorbens voneinander getrennt werden.

Die Vorrichtung besteht aus einem Luftbeschleuniger 1, in dem der mattenartige Trägerstoff zunächst einer hochbeschleunigten Lufströmung ausgesetzt wird, durch die der Trägerstoff in Flocken aufgelöst wird.

Des weiteren weist die Vorrichtung mehrere, nacheinander geschaltete, in unterschiedlichen horizontalen Ebenen angeordnete Trenndecks 2 auf, die treppenförmig zueinander stehen und von denen das oberste dem Luftbeschleuniger 1 zugeordnet ist.

Diese Trenndecks 2 werden durch Unwuchtmotoren 12 in Schwingungen versetzt, die in ihren Frequenzen und Amplituden genau definiert sind. Die Trenndecks 2 sind in ihrer Neigung einstellbar.

Jedes Trenndeck 2 ist wannenförmig ausgeführt und mit einer Siebfläche 3 abgedeckt. Das durch Vibration getrennte Material in der Wanne wird seitlich zu einer Doppelvibrorinne 5 geführt. Diese bildet einen integrierten Schwingkörper und wird ebenfalls durch die Unwuchtmotoren 12 in Schwingungen versetzt.

Die Doppelvibrorinne 5 ist zweiteilig und kann sowohl als Rohr wie auch in einer anderen geometrischen Form mit einem entsprechenden Zwischensiebboden 6 ausgerüstet werden.

Durch Vibration und geeignete Neigung werden die auf der Siebfläche 3 des ersten Trenndecks 2 liegenden Flocken so weit nach vorne gefördert, daß sie auf das darunterliegende zweite Trenndeck 2 fallen. Die Transportgeschwindigkeit kann durch die Veränderung der Neigungswinkel der Trenndecks 2 optimiert werden.

Die in den Trenndecks 2 separierten Flocken werden über zwei Zellenradschleusen 8 ausgetragen und pneumatisch in eine Produktionseinrichtung gefördert, wobei die Luft für die Entlüftung als Förderluft verwendet wird.

Im beschriebenen Sinn erfolgt eine Separierung auch durch die nachfolgenden Doppelvibrorinnen 5, deren Neigungswinkel dem Produktstrom angepaßt werden kann.

Im oberen Deck der Doppelvibrorinne 5 werden die Restflocken separiert und abgesaugt. Das Absorbensmaterial gelangt durch einen unteren Rinnenboden 7 über eine nachgeschaltete Zellenradschleuse 8 zu einem pneumatischen Transport 9 und wird in einem nachgeschalteten Abscheider vom Luftstrom getrennt.

Das Absorbensmaterial mit Restverunreinigungen wird über eine nicht dargestellte Dosiervorrichtung zu einer gleichfalls nicht gezeigten Siebeinrichtung geführt, die belüftet ist. Der Siebdurchlaß wird anschließend in einem Sichter auf den Endzustand gereinigt, wobei der Siebüberlauf separat erfaßt wird.

Die gesamte Vibrationseinheit ist schwingungsgedämpft aufgestellt und mit einer schwingungsentkoppelten Erfassungshaube versehen, die entlüftet wird, so daß ein staubfreier Betrieb gewährleistet ist.

Das überschüssige Material von den Trenndecks 2 gelangt über eine Förderschnecke 10 und einem pneumatischen Transport zu der Ausgangsposition der Materialaufgabe, so daß ein in sich geschlossenes System ohne Materialverlust gegeben ist.

### Bezugszeichenliste

- 1: Luftbeschleuniger
- 2: Trenndeck
- 3: Siebfläche
- 4: Wanne
- 5: Doppelvibrorinne
- 6: Zwischensiebboden
- 7: Rinnenboden
- 8: Zellenradschleuse
- 9: pneumatischer Transport
- 10: Förderschnecke
- 11: Zellenradschleuse
- 12: Unwuchtmotor

## Patentansprüche

1. Verfahren zum stofflichen Trennen von rieselfähigem Material, das in einem watteförmigen, mattenartigen Trägerstoff eingelagert ist, wobei zunächst der mattenartige Trägerstoff zu Flocken zerrissen und anschließend das rieselfähige Material durch Versetzen der Flocken in Vibration von dem Trägerstoff getrennt wird, **dadurch gekennzeichnet, daß** das Zerreißen des mattenartigen Trägerstoffs durch eine beschleunigte Luftströmung erfolgt.

2. Vorrichtung zur Durchführung des Verfahrens nach Anspruch 1, **dadurch gekennzeichnet, daß** ein Luftbeschleuniger (1) zum Zerreissen des mattenartigen Trägerstoffs vorgesehen ist, dem zumindest ein in Vibration versetzbares Trenndeck (2) mit einer Siebfläche (3) und einer Wanne (4) als Baueinheit nachgeschaltet ist.

3. Vorrichtung nach Anspruch 2, **dadurch gekennzeichnet, daß** dem ersten Trenndeck (2) treppenförmig fallend weitere Trenndecks (2) nachgeordnet sind, die sich teilweise überdecken.

4. Vorrichtung nach Anspruch 2 oder 3, **dadurch gekennzeichnet, daß** die Trenndecks (2) jeweils zum darunterliegenden in ihrer Neigung verstellbar sind.

5. Vorrichtung nach Anspruch 2, **dadurch gekennzeichnet, daß** den Trenndecks (2) mindestens eine seitlich angeordnete Vibrorinne (5) zugeordnet sind, durch die die getrennten Materialien zur Weiterverarbeitung förderbar sind.

6. Vorrichtung nach Anspruch 5, **dadurch gekennzeichnet, daß** die Vibrorinne (5) zweiteilig ausgebildet, mittig mit einem Zwischensiebboden (6) versehen und in ihrer Neigung verstellbar ist.

## Claims

1. Method for the material separation of pourable material which is embedded in a wadding-form, mat-like carrier material, wherein first the mat like carrier material is torn into tufts and subsequently the pourable material is separated trom the carrier material by causing the tufts to vibrate, characterised in that the tearing-up of the mat-like carrier material is effected by an accelerated air flow.

2. Apparatus for carrying out the method according to claim 1, characterised in that an air accelerator (1) for tearing up the mat-like carrier material is provided and downstream thereof is connected at least one separation level (2) which can be caused to vibrate and which has, as a constructional unit, a sieving area (3) and a tank (4).

3. Apparatus according to claim 2, characterised in that further separation levels (2), descending in the form of steps, are arranged downstream of the first separation level and partially overlap each other.

4. Apparatus according to claim 2 or claim 3, characterised in that the separation levels (2) are each adjustable in terms of their inclination relative to the separation level below.

5. Apparatus according to claim 2, characterised in that at least one laterally arranged vibration channel (5) is/are associated with the separation levels (2), through which channel(s) the separated materials can be conveyed for further processing.

6. Apparatus according to claim 5, characterised in that the vibration channel (5) is formed as two members, provided centrally with an intermediate sieve base (6) and is adjustable in terms of its inclination.

## Revendications

1. Procédé pour la séparation matérielle d'une matière coulable, qui se trouve dans un matériau de base sous forme de ouate, de type natte, dans lequel le matériau de base de type natte est tout d'abord déchiqueté pour obtenir des flocons et ensuite la matière coulable est séparée du matériau de base en mettant les flocons en vibration, caractérisé en ce que le déchiquetage du matériau de base sous forme de natte s'effectue à l'aide d'un courant d'air accéléré.

2. Dispositif pour réaliser le procédé selon la revendication 1, caractérisé en ce qu'un accélérateur d'air (1) est prévu pour déchiqueter le matériau de base de type natte, en aval duquel est au moins placé un pont de séparation (2) pouvant être mis en vibration avec une surface de tamisage (3) et une cuve (4) sous forme d'unité de montage.

3. Dispositif selon la revendication 2, caractérisé en ce que d'autres ponts de séparation (2) placés en cascade descendante et qui se chevauchent partiellement sont prévus après le premier pont de séparation.

4. Dispositif selon la revendication 2 ou 3, caractérisé en ce que les ponts de séparation (2) sont réglables respectivement en inclinaison par rapport au pont de séparation se trouvant juste en dessous.

5. Dispositif selon la revendication 2, caractérisé en ce qu'au moins une goulotte vibrante (5) agencée latéralement est affectée aux ponts de séparation (2), au moyen de laquelle les matières séparées peuvent être transportées pour être traitée ultérieurement.

6. Dispositif selon la revendication 5, caractérisé en ce que la goulotte vibrante (5) se compose de deux parties, et est munie au centre d'un fond intermédiaire de tamisage (6), l'inclinaison de ladite goulotte pouvant être réglée.
